# DEMANDE DE BREVET EUROPEEN

(11) **EP 0 737 984 A1**
(43) Date de publication de la demande: **16.10.1996**
(21) Numéro de dépôt: 96400654.8
(22) Date de dépôt: 27.03.1996
(51) Int. Cl.: G21C 17/003, G21C 9/016

(54) **Procédé et dispositif de détection et de surveillance du percement du fond de la cuve d'un réacteur nucléaire**

(30) Priorité: 11.04.1995 FR 9504342
(71) Demandeur: FRAMATOME, 92400 Courbevoie (FR)
(72) Inventeur: Grosmaire, Jacques, 77090 Collegien (FR)
(74) Mandataire: Bouget, Lucien

(57) **Abrégé**

La cuve du réacteur est placée à l'intérieur d'un puits de cuve ayant un axe vertical et comportant un fond (5) disposé en-dessous et à l'aplomb du fond de la cuve. Dans le cas d'une fusion du coeur du réacteur à la suite d'un fonctionnement accidentel du réacteur nucléaire, pouvant entraîner un percement du fond de la cuve, on mesure, de manière continue, la température en une pluralité de points (14) répartis sur la surface (8) du fond du puits de cuve (5) à l'aplomb du fond de la cuve. De préférence, on réalise une mesure optique des températures sur le fond (5) du puits de cuve en utilisant une pluralité de fibres optiques (10) disposées sur le fond du puits de cuve (5) suivant la longueur desquelles sont répartis des réseaux de Bragg (14) susceptibles de réfléchir chacun un signal lumineux ayant une longueur d'onde particulière.

## Description

L'invention concerne un procédé et un dispositif de détection et de surveillance du percement du fond de la cuve d'un réacteur nucléaire, dans le cas d'une fusion du coeur du réacteur et d'équipements internes disposés à l'intérieur de la cuve, due à un fonctionnement accidentel du réacteur nucléaire.

Les réacteurs nucléaires à eau sous pression comportent une cuve de forme générale cylindrique renfermant le coeur du réacteur nucléaire, disposée avec son axe vertical dans un puits de cuve cylindrique ayant un fond inférieur situé à l'aplomb de la cuve. Le coeur du réacteur nucléaire est refroidi par de l'eau sous pression circulant dans le circuit primaire du réacteur et à l'intérieur de la cuve en contact avec les assemblages combustibles.

Dans le cas de certains accidents survenant dans le réacteur et se traduisant par une perte de la fonction de refroidissement du coeur, on doit envisager, compte tenu des conséquences très graves qui en résulteraient, bien que la probabilité d'un tel événement soit extrêmement faible et pratiquement nulle, le cas où les injections de secours du réacteur ne pourraient pas être mises en fonctionnement. Il peut alors se produire une séquence accidentelle conduisant à la fusion du coeur et des équipements internes du réacteur en l'absence d'eau de refroidissement, ce qui peut entraîner une destruction par percement du fond de la cuve et l'écoulement de la masse du coeur et des matériaux entourant le coeur, dans le puits en béton contenant la cuve du réacteur.

Le contact de la masse en fusion du combustible et des matériaux entourant le combustible, appelé corium, dont la température peut atteindre des valeurs de l'ordre de 2500°C, en l'absence de refroidissement, peut entraîner la destruction complète du fond du puits de cuve.

En fonctionnement normal du réacteur, sans accident, les conditions ambiantes sont très contraignantes dans le puits de cuve. En effet, il existe une irradiation permanente qui augmente dans le temps au cours de la durée de vie du réacteur. Le débit de dose cumulé sur la durée de vie prévue de 40 ans d'un réacteur peut atteindre 280 Mrad.

Il est important, dans l'hypothèse de l'accident par perte de réfrigérant évoqué ci-dessus, de surveiller l'évolution du phénomène et particulièrement l'évolution de l'état du fond de la cuve pour définir si celui-ci est partiellement ou totalement fondu, et si le corium s'écoule à travers la cuve, en quelques points seulement ou sur la surface totale du fond.

Les conditions d'ambiance dans le puits de cuve, dans le cas d'un percement de la cuve, font qu'il est difficile de placer des caméras dans celui-ci afin de visualiser, sur un écran l'évolution du phénomène. En effet, les vapeurs des matériaux en fusion, ajoutées à la vapeur d'eau de refroidissement vont provoquer un aveuglement du dispositif de surveillance.

On ne connaissait pas jusqu'ici de procédé efficace de détection du percement du fond de la cuve d'un réacteur nuléaire et de surveillance de l'évolution de l'état du fond de cuve en cas de fusion du coeur.

Le but de l'invention est de proposer un procédé de détection et de surveillance du percement du fond de la cuve d'un réacteur nucléaire, dans le cas d'une fusion du coeur du réacteur nucléaire et d'équipements internes disposés à l'intérieur de la cuve, due à un fonctionnement accidentel du réacteur nucléaire, la cuve étant placée à l'intérieur d'un puits de cuve ayant un axe vertical ménagé dans une structure en béton d'un bâtiment du réacteur et comportant un fond de puits disposé en-dessous et à l'aplomb du fond de la cuve, ce procédé permettant de détecter et de surveiller l'évolution du percement du fond du réacteur nucléaire, à la suite d'un accident ayant entraîné une fusion du coeur et des structures internes de la cuve.

Dans ce but, on mesure, de manière continue, la température en une pluralité de points répartis sur la surface du fond du puits de cuve.

De manière préférentielle, pour réaliser la mise en oeuvre de l'invention, on effectue des mesures de température par des moyens optiques.

Pour cela, on envoie un signal lumineux à large spectre de fréquence dans une pluralité de fibres optiques disposées sur le fond du puits de cuve, réparties suivant toute la section transversale du fond du puits de cuve et comportant chacune une pluralité de réseaux de Bragg répartis suivant leur longueur, chaque réseau de Bragg étant prévu pour assurer la rétrodiffusion d'une longueur d'onde particulière, on récupère les signaux rétrodiffusés par les réseaux de Bragg et on détermine à partir des longueurs d'onde des signaux rétrodiffusés, la répartition de température dans le fond de la cuve.

Afin de bien faire comprendre l'invention, on va maintenant décrire, à titre d'exemple non limitatif, en se référant aux figures jointes en annexe, la mise en oeuvre du procédé suivant l'invention et des moyens pour réaliser cette mise en oeuvre par une méthode optique.

La figure 1 est une vue schématique en coupe verticale du bâtiment d'un réacteur refroidi par de l'eau sous pression.

La figure 2 est une vue schématique montrant une partie d'une fibre optique comportant un réseau de Bragg.

Les figures 3A et 3B sont des diagrammes montrant la forme d'un signal optique envoyé dans une fibre optique et la forme du signal rétrodiffusé par un réseau de Bragg gravé sur la fibre.

La figure 4 est une vue de dessus schématique montrant la disposition de fibres optiques de mesure de température dans le fond du puits de la cuve du réacteur nucléaire.

La figure 5 est un schéma d'une installation de détection et de surveillance permettant de mettre en oeuvre le procédé suivant l'invention par mesure optique de température dans le fond du puits de la cuve d'un réacteur nucléaire.

La figure 6 est une vue schématique d'une installation de détection et de surveillance suivant une variante de réalisation.

La figure 7 est une vue en plan du fond du puits de cuve d'un réacteur nucléaire sur lequel ont été portées les températures mesurées par un dispositif suivant l'invention, dans le cas d'un percement local du fond de la cuve du réacteur.

La figure 8 est une vue agrandie d'une partie du fond du puits de la cuve dans laquelle se déverse le matériau fondu du coeur et des équipements internes de la cuve, après percement du fond de la cuve.

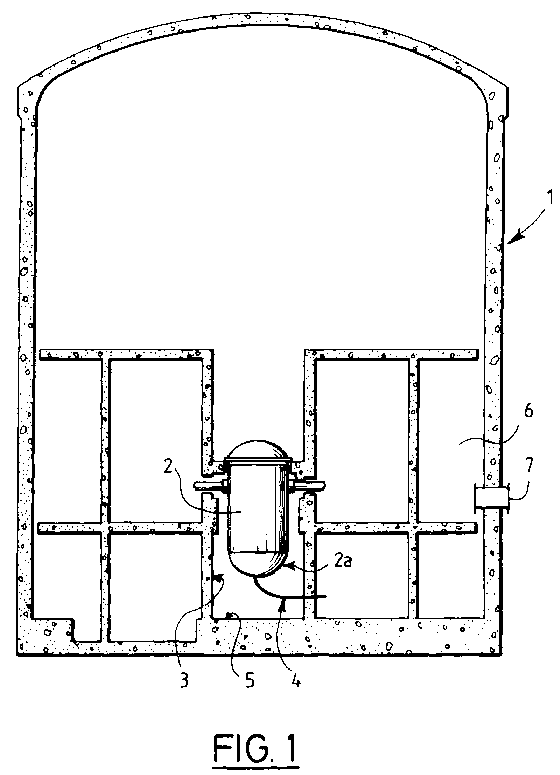

Sur la figure 1, on voit le bâtiment d'un réacteur nucléaire à eau sous pression désigné de manière générale par le repère 1. Le bâtiment du réacteur 1 est constitué par une structure en béton de grandes dimensions à l'intérieure de laquelle est ménagé un puits 3 à axe vertical à l'intérieur duquel est disposée la cuve 2 du réacteur nucléaire renfermant le coeur du réacteur constitué par des assemblages de combustible. Le puits 3 qui constitue le puits de cuve comporte un fond inférieur plat 5 qui se trouve en-dessous et à l'aplomb du fond bombé inférieur 2a de la cuve 2.

Le fond bombé 2a de la cuve est traversé par une pluralité de tubes de guidage d'instrumentation tels que le tube 4 représenté à titre d'exemple. Chacun des tubes d'instrumentation permet de relier une manchette de traversée du fond de la cuve à un local de mesure situé dans une disposition latérale par rapport au puits de cuve 3 dans le bâtiment du réacteur. Dans le cas d'un réacteur nucléaire d'une puissance électrique de 1000 MW, le fond 2a de la cuve du réacteur nucléaire est traversé par cinquante manchettes reliées chacune à un tube d'instrumentation. L'ensemble de l'instrumentation du coeur permet de mesurer le flux neutronique et la température à l'intérieur du coeur, pendant le fonctionnement du réacteur.

A l'intérieur du bâtiment du réacteur 1 qui présente généralement une section circulaire, est ménagé un compartiment annulaire 6, dans une disposition sensiblement coaxiale par rapport au puits de cuve. L'espace annulaire 6 peut être utilisé pour installer des circuits de fluide ou des circuits électriques comportant des coffrets de commande ou de raccordement qui sont placés à l'intérieur du compartiment annulaire. Les traversées étanches telles que la traversée 7 de la paroi extérieure du bâtiment de sécurité sont réparties à la périphérie du bâtiment du réacteur et assurent le passage de câbles électriques et des tubes de liaison des différents circuits de fluide du réacteur, à l'exception de la sortie de la vapeur produite par le réacteur et de l'arrivée d'eau d'alimentation des générateurs de vapeur associés à la cuve 2. Les passages de traversées étanches telles que la traversée 7 peuvent servir au passage de tous conduits de mesure qui peuvent être constitués par des câbles de mesure électriques ou des fibres optiques.

La cuve 2 renferme le coeur du réacteur constitué par des assemblages de combustible produisant de la chaleur du fait des réactions nucléaires dont le coeur du réacteur est le siège, cette chaleur étant prélevée dans le coeur par l'eau de refroidissement primaire qui assure elle-même l'échauffement et la vaporisation de l'eau d'alimentation dans les générateurs de vapeur du réacteur nucléaire (non représentés) disposés à l'intérieur du bâtiment du réacteur. Le bâtiment du réacteur 1 renferme également des circuits de refroidissement de secours du réacteur nucléaire qui sont mis en fonctionnement dans le cas d'un fonctionnement défectueux ou d'une détérioration du circuit primaire.

On assure donc dans tous les cas un refroidissement du coeur suffisant pour éviter un échauffement excessif du matériau combustible pouvant conduire à une détérioration des assemblages de combustible.

Il est donc très improbable, sinon impossible, que le coeur subisse un échauffement excessif conduisant à ces détériorations et a fortiori à une fusion complète se produisant en même temps que la fusion des structures internes à la cuve entourant le coeur.

Cependant, ce type d'accident hautement improbable doit être malgré tout envisagé, de sorte qu'il est nécessaire de prévoir des moyens de détection et de surveillance d'un percement du fond de la cuve par un écoulement d'une masse en fusion constituée par le coeur en matériau combustible, le matériau de gainage des éléments de combustible et certaines structures internes à la cuve du réacteur nucléaire disposées autour du coeur.

Les matériaux en fusion provenant de la cuve du réacteur tombent, après percement de la cuve en un ou plusieurs points, sur le fond 5 du puits de cuve 3. Lorsque le matériau en fusion parvient au contact du béton constituant le fond 5 du puits de cuve 3, la température du fond de puits de cuve qui est, dans les conditions normales, voisine de 100°C peut s'élever jusqu'à une température très supérieure et qui peut aller jusqu'à 1500°C.

Selon l'invention, on réalise la détection du percement du fond de la cuve et la surveillance de l'évolution du phénomène en mesurant et en relevant la température en une pluralité de points du fond 5 du puits de cuve disposés à l'aplomb du fond 2a de la cuve 2. On réalise ainsi une cartographie thermique du fond 5 du puits de cuve 3 qui permet de visualiser les zones du fond du puits de cuve sur lesquelles s'écoule du corium et donc les zones du fond de la cuve dans lesquelles s'est produit un percement, par exemple au niveau d'une manchette de traversée d'un tube de guidage d'instrumentation.

Pour obtenir une carte précise des gradients de température sur toute la surface du fond du puits de cuve, il est nécessaire de disposer d'un nombre de points de mesure relativement important, par exemple de l'ordre de 100, correspondant à environ un point de mesure pour une surface de 0,3 à 0,5 m².

Il est possible, bien entendu, de réaliser la cartographie thermique du fond de puits de cuve en plaçant des capteurs de température, tels que des thermocouples ou des sondes à résistance en différents points de la surface du fond 5 du puits de cuve 3, à l'aplomb du fond 2a de la cuve. Cependant, l'utilisation de capteurs implique une liaison électrique de chacun des capteurs, par au moins deux fils électriques, avec une unité d'alimentation et de mesure qui est située de préférence à l'extérieur du bâtiment du réacteur. L'utilisation de capteurs isolés nécessite donc une installation de câblage très importante dont le coût peut être très élevé. D'autre part, les nombreuses lignes de câblage risquent d'être détruites rapidement dans le cas d'un percement du fond de la cuve. En outre, les mesures électriques peuvent être perturbées par de nombreux facteurs, à l'intérieur du bâtiment du réacteur.

On utilisera donc de préférence une méthode de mesure optique permettant d'éviter l'utilisation d'un ensemble de câblage important et des perturbations des mesures dans l'ambiance du réacteur nucléaire.

On connaît par le EP-A-0.213.872, un procédé de mesure optique fondé sur la réflectométrie optique permettant de capter des valeurs d'un paramètre tel que la température en différents emplacements le long d'une fibre. On envoie dans la fibre un signal lumineux dont une partie est rétrodiffusée en direction d'un système de mesure, du fait des variations d'indice de diffusion locale dues à des variations locales de température de la fibre. Cependant, dans le cas de l'utilisation de ce procédé, l'atténuation totale dans la fibre est importante, ce qui oblige à émettre un signal de forte amplitude. En outre, pour pouvoir différencier les temps de parcours des signaux dans la fibre pour localiser les points soumis à des températures variables, il faut analyser le signal réfléchi à une fréquence élevée, ce qui augmente le coût du matériel utilisé.

On connaît également un procédé de rétrodiffusion de signaux optiques à l'intérieur d'une fibre optique utilisant un réseau qui peut être gravé sur la fibre en un endroit quelconque qui est connu sous le nom de réseau de Bragg.

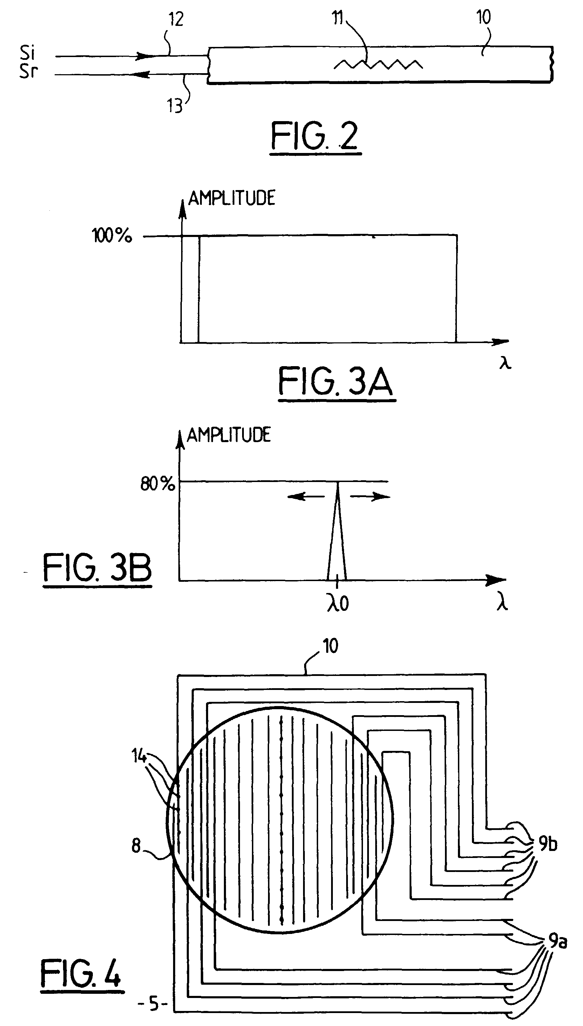

Sur la figure 2, on a représenté un tronçon d'une fibre optique 10 sur laquelle on a réalisé par photogravure un réseau de Bragg 11 qui est représenté sur la figure 2 de manière symbolique. Si on envoie dans la fibre sur laquelle a été gravé le réseau de Bragg 11, un faisceau lumineux 12 ayant un large spectre de fréquence, le spectre de fréquence du faisceau incident 12 étant représenté de manière très schématique sur la figure 3A, le signal 13 de longueur d'onde λ0, réfléchi par le réseau de Bragg 11 et renvoyé à l'extrémité d'entrée de la fibre 10 présente une longueur d'onde précise λ0 dépendant de la forme de réalisation du réseau de Bragg 11. On a représenté le signal lumineux 13 réfléchi par le réseau de Bragg 11 sur la figure 3B.

En fait, la longueur d'onde λ0 du signal réfléchi par le réseau 11 est parfaitement définie pour des conditions de contrainte mécanique et une température de la fibre définies dans la zone dans laquelle a été réalisé le réseau 11.

Dans le cas d'une modification de ces conditions et en particulier dans le cas d'une modification de la température dans la zone de la fibre 10 comportant le réseau 11, le signal réfléchi présente une nouvelle longueur d'onde λ'0 différente de λ0, la différence entre λ'0 et λ0 étant d'autant plus importante que la perturbation de la zone de la fibre dans laquelle est situé le réseau est plus importante. En particulier, dans le cas d'une élévation de température, le décalage en fréquence du signal réfléchi permet de déterminer l'élévation de température.

Comme il est visible sur la figure 3B, le signal réfléchi est légèrement atténué, son amplitude étant par exemple de 80 % de l'amplitude du faisceau incident.

Dans le cas où l'on utilise une fibre optique suivant la longueur de laquelle sont réparties des zones successives comportant des réseaux de Bragg de caractéristiques différentes assurant chacun la réflexion d'un signal ayant une longueur d'onde bien déterminée, le signal réfléchi présente plusieurs longueurs d'onde correspondant chacune à une longueur d'onde réfléchie par un réseau de Bragg particulier disposé suivant la longueur de la fibre.

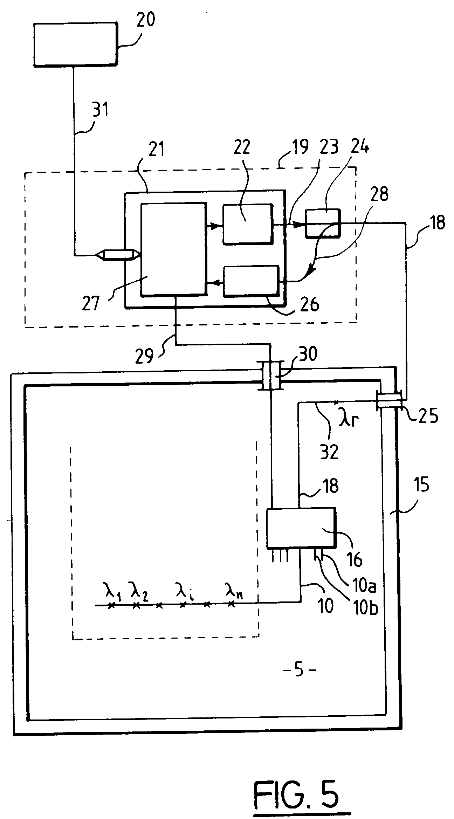

On peut ainsi réaliser des fibres optiques comportant des réseaux de Bragg successifs espacés suivant la longueur de la fibre assurant la réflexion de signaux ayant des longueurs d'onde différentes, λ1, λ2, ..., λi, ..., λn. De telles fibres optiques qui ont été représentées sur les figures 4 et 5 peuvent être utilisées avantageusement pour la mise en oeuvre d'un procédé de détection et de surveillance suivant l'invention.

Sur la figure 4, on a représenté la projection verticale 8 du fond de cuve 2a sur le fond de puits de cuve 5 du réacteur nucléaire.

Pour la mise en oeuvre d'un procédé de détection et de surveillance du percement du fond de cuve selon l'invention, on dispose sur le fond de puits 5, deux ensembles de fibres optiques 9a et 9b constituant un réseau recouvrant la zone 8 correspondant à la projection du fond de cuve et permettant de réaliser des mesures de température du fond du puits de cuve 5 en un très grand nombre de points répartis à l'intérieur de la zone 8.

Les fibres optiques 10 constituant les ensembles 9a et 9b comportent une partie rectiligne suivant laquelle sont disposées successivement et espacées de manière régulière, des zones de mesure 14 constituées par des zones successives de la fibre optique dans lesquelles sont gravés des réseaux de Bragg.

Les réseaux de Bragg successifs gravés sur une même fibre optique 9 sont réalisés de manière à assurer la réflexion de signaux ayant des longueurs d'onde différentes λ1, λ2, ..., λi, ..., λn.

Les parties rectilignes des fibres optiques 10 de l'ensemble 9a et de l'ensemble 9b sont toutes parallèles entre elles et disposées avec un écartement fixe de l'ordre de 0,30 m. Les parties rectilignes des fibres 10 constituant l'ensemble 9a sont dirigées dans un sens opposé aux fibres 10 constituant l'ensemble 9b et intercalées chacune entre deux fibres successives de l'ensemble 9b de sorte que les fibres des ensembles 9a et 9b aient une disposition en peigne avec un pas d'environ 0,30 m.

Dans le cas d'un fond de puits de cuve 5 présentant un diamètre de l'ordre de 6 m, on dispose environ vingt fibres successives qui comportent chacune un ensemble de points de mesure constitués par des réseaux de Bragg. On obtient ainsi environ cent points de mesure répartis sur toute la surface du fond de puits de cuve 5, dans la zone 8 située à l'aplomb du fond de la cuve du réacteur nucléaire.

Chacun des points de mesure sera défini par deux coordonnées dont l'une correspond à un numéro d'ordre de la fibre optique qui peut être facilement déterminé du fait que les fibres sont reliées, comme il sera expliqué plus loin à un commutateur optique et alimentées successivement, et dont l'autre correspond à la longueur d'onde réfléchie, c'est-à-dire au réseau de Bragg dont la position sur la fibre optique est parfaitement déterminée.

On peut donc associer à chacune des mesures de température effectuées, la position précise du point où cette mesure a été réalisée.

On peut ainsi déterminer par analyse des signaux réfléchis par les fibres optiques des ensembles 9a et 9b, la cartographie thermique du fond de puits de cuve, à l'aplomb du fond de la cuve.

Les fibres optiques de mesure peuvent être placées directement sur le fond du puits de cuve ou disposées à l'intérieur de gaines métalliques qui assurent leur protection mécanique. L'ensemble du réseau des fibres optiques peut également être maintenu et protégé par une légère couche de béton, par exemple de béton réfractaire étalée au-dessus du réseau de fibres de mesure de température déposé sur le fond du puits de cuve. Dans ce cas, les fibres sont noyées à l'intérieur d'une mince couche de béton sur laquelle s'écoule le corium en cas de percement de la cuve.

Sur la figure 5, on a représenté une installation de mesure de température qui peut être utilisée pour la mise en oeuvre du procédé selon l'invention de détection et de surveillance du percement du fond d'une cuve de réacteur nucléaire.

Sur la figure 5, on a représenté de manière schématique, la section 15 du bâtiment du réacteur nucléaire à l'intérieur duquel est placée une partie de l'installation de mesure de température. La partie de l'installation disposée à l'intérieur du bâtiment réacteur 15 comporte les fibres optiques 10a, 10b, ..., 10p, constituant les deux ensembles de fibres 9a et 9b placés dans une disposition en peigne dans la zone du fond de puits de cuve 5 située à l'aplomb du fond de la cuve. Chacune des fibres 10 des ensembles 9a et 9b comporte, dans sa partie disposée à l'aplomb de la cuve, n zones de mesure constituées par des réseaux de Bragg assurant chacun la réflexion d'un signal de longueur d'onde λ1, λ2, ..., λi, ..., λn.

La partie du dispositif située à l'intérieur de l'enceinte 15 du réacteur nucléaire comporte également un commutateur optique 16 qui peut être par exemple un commutateur du type "lightwave switches" commercialisé par la société Hewlett Packard.

Chacune des fibres 10 des ensembles de fibres 9a et 9b est reliée à l'une de ses extrémités à une sortie du commutateur optique 16.

Le commutateur 16 comporte une entrée reliée à une fibre optique 18 assurant la transmission au commutateur optique d'un faisceau lumineux ayant une large bande spectrale. Le commutateur 16 assure la distribution du faisceau lumineux à large bande spectrale, successivement dans chacune des fibres optiques de mesure 10.

La partie de l'installation de mesure disposée à l'extérieur du bâtiment du réacteur 15 comporte une centrale d'acquisition 19 qui est généralement disposée à l'intérieur d'un local électrique à proximité du bâtiment réacteur et qui est reliée d'une part à un poste de commande et de visualisation 20 situé dans la salle de commande de la centrale nucléaire et d'autre part au commutateur optique 16 disposé à l'intérieur du bâtiment du réacteur 15. La centrale d'acquisition 19 comporte un sous-ensemble 21 d'émission, de réception et de traitement des signaux de mesure. Le sous-ensemble 21 comporte un module d'émission 22 assurant l'émission du faisceau lumineux à large bande de fréquence qui est transmis au commutateur optique 16, à l'intérieur du bâtiment du réacteur 15, par l'intermédiaire d'une première fibre optique 23, d'un coupleur 24 et de la fibre optique d'alimentation 18 reliée à la sortie du coupleur 24. Le module d'émission 22 comporte une diode électroluminescente à large spectre ou encore une diode accordable qui émet une succession de signaux correspondant chacun à une longueur d'onde différente comprise dans un large spectre.

La fibre optique 18 traverse la paroi du bâtiment du réacteur, par l'intermédiaire d'une traversée étanche 25.

Le sous-ensemble d'émission et de réception 21 comporte de plus un module de réception 26 assurant la réception des signaux lumineux réfléchis par les réseaux tracés sur les fibres optiques et une unité d'alimentation, de commande et de traitement 27.

L'entrée du module de réception 26 est reliée par une fibre optique 28 à une voie de sortie du coupleur 24, de sorte que les signaux optiques réfléchis dans les différentes fibres par les réseaux parviennent au module de réception 26 qui transmet à l'unité 27, des signaux électriques représentatifs des signaux lumineux réfléchis à l'intérieur des fibres.

Les signaux optiques transformés par le module de réception 26 en signaux électriques sont transmis à l'unité de traitement et de commande 21. L'unité 21 transmet au poste de commande et de visualisation 20 des données qui sont enregistrées ou affichées sous la forme d'une image de la cartographie thermique du fond du puits de cuve.

L'unité de traitement et de commande 21 assure l'alimentation et la commande du module d'émission 22, le traitement des signaux de mesure provenant du module de réception 26 et le pilotage du commutateur optique 16, par l'intermédiaire d'une ligne de liaison électrique 29 assurant la jonction, à travers une traversée étanche 30 entre l'unité de traitement et de commande 21 et le commutateur optique 16 disposé à l'intérieur du bâtiment du réacteur 15.

L'unité de commande et de traitement 21 est de plus reliée au poste de visualisation 20 situé dans la salle de commande par l'intermédiaire d'une ligne de liaison 31.

En outre, les informations peuvent également être transmises à un poste de surveillance extérieur à la salle de commande ou même extérieur à la centrale pour permettre de suivre l'évolution du percement du fond de la cuve, dans le cas d'un accident grave.

Le commutateur optique 16 réalise l'alimentation séquentielle de chacune des fibres optiques 10 de manière que des signaux réfléchis soient reçus successivement par le module de réception 26. Chaque signal reçu par le module de réception est associé au repère de la fibre alimentée de laquelle parvient le signal réfléchi. Les différentes fréquences reçues déterminent les points de mesure de température correspondant à chacun des réseaux répartis suivant la longueur de la fibre.

A titre de variante, le commutateur optique 16 peut être installé à l'extérieur du bâtiment 15 du réacteur.

Dans ce cas, la pénétration étanche 25 est prévue pour le passage des fibres optiques 10 qui comportent une partie d'extrémité disposée sur le fond de puits de cuve 5, à l'aplomb du fond de cuve. Sur cette partie d'extrémité des fibres optiques disposées parallèlement les unes aux autres au-dessous du fond de cuve, sont gravés des réseaux de Bragg assurant chacun la réflexion d'un signal de longueur d'onde déterminée. Dans le cas où le commutateur optique 16 est placé à l'extérieur du bâtiment du réacteur 15, la ligne de commande électrique 29 est reliée au commutateur optique 16 à l'extérieur du bâtiment du réacteur sans avoir à traverser la paroi du bâtiment du réacteur par une traversée étanche telle que la traversée 30.

Un réseau de Bragg 32 est gravé sur une partie de la fibre optique 18 d'alimentation du commutateur optique située à l'intérieur du bâtiment réacteur 15, dans une zone où la température est relativement stable et peut être facilement mesurée par des moyens connus. La valeur du signal qui correspond à cette température connue est utilisée comme valeur de référence et permet de calibrer le système en longueur d'onde.

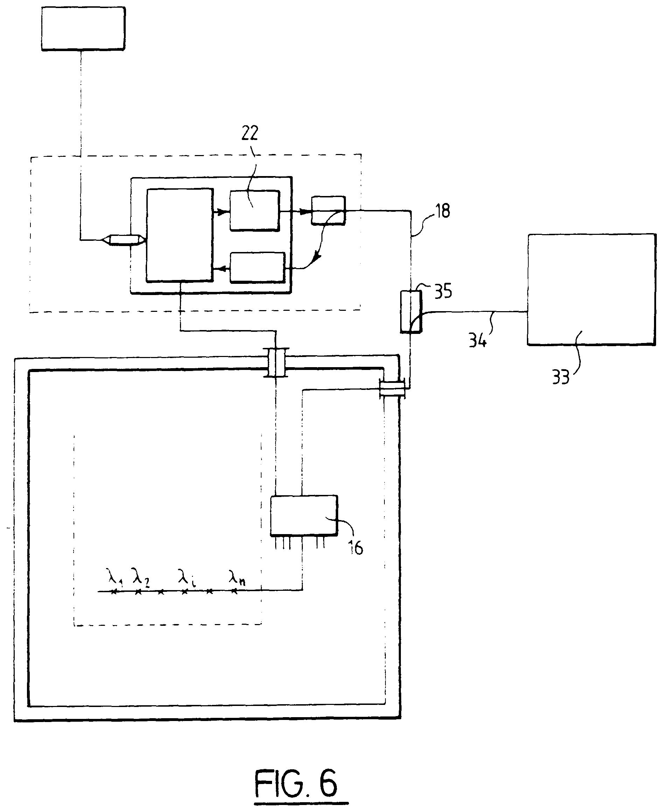

Sur la figure 6, on a représenté de manière schématique une variante de réalisation de l'installation de mesure de température sur le fond du puits de cuve d'un réacteur nucléaire.

Les éléments correspondants sur les figures 5 et 6 portent les mêmes repères.

Les installations de mesure représentées sur les figures 5 et 6 sont identiques en ce qui concerne les éléments permettant de déterminer la cartographie thermique du fond de la cuve et diffèrent uniquement par la présence, dans le cas de l'installation représentée sur la figure 6, d'un moyen permettant de contrôler et de surveiller la continuité des propriétés des circuits de mesure utilisés et de vérifier l'intégrité des fibres et des composants optiques du circuit de mesure.

Le moyen de contrôle et de surveillance est constitué par un réflectomètre laser 33 de type connu qui peut être constitué par exemple par un réflectomètre OTDR (Optical Time Domain Reflectometer) commercialisé par la société Laser Precision Corporation. Le réflectomètre 33 émet un faisceau laser centré sur une longueur d'onde située en dehors du spectre du faisceau émis par le module d'émission 22. Ce faisceau est transmis par la fibre optique 34 à la fibre d'alimentation 18, par l'intermédiaire d'un coupleur 35. Le faisceau du réflectomètre 33 est transmis par le commutateur optique 16 à chacune des fibres optiques de mesure 10. Le faisceau est renvoyé, par l'extrémité libre de chacune des fibres 10, vers le commutateur 16 et, par l'intermédiaire de la fibre 18 et du coupleur 35, sur le réflectomètre 33.

Le réflectomètre 33 permet de suivre l'évolution du faisceau de retour par rapport au faisceau émis et de ce fait de surveiller l'évolution dans le temps des différents composants du circuit optique. La partie des fibres 10 sur laquelle sont gravés les réseaux de Bragg est particulièrement exposée à un débit important de dose d'irradiation, du fait que les fibres 10 sont placées à l'intérieur du puits de cuve. On constate, au cours du temps, un phénomène d'opacification des fibres sous irradiation. Ce phénomène provoque une atténuation des signaux à l'intérieur des fibres optiques. Le réflectomètre permet de suivre le phénomène au cours du temps et de donner des indications qui permettent de procéder en temps utile au remplacement des fibres optiques de mesure, pendant les périodes normales d'arrêt du réacteur.

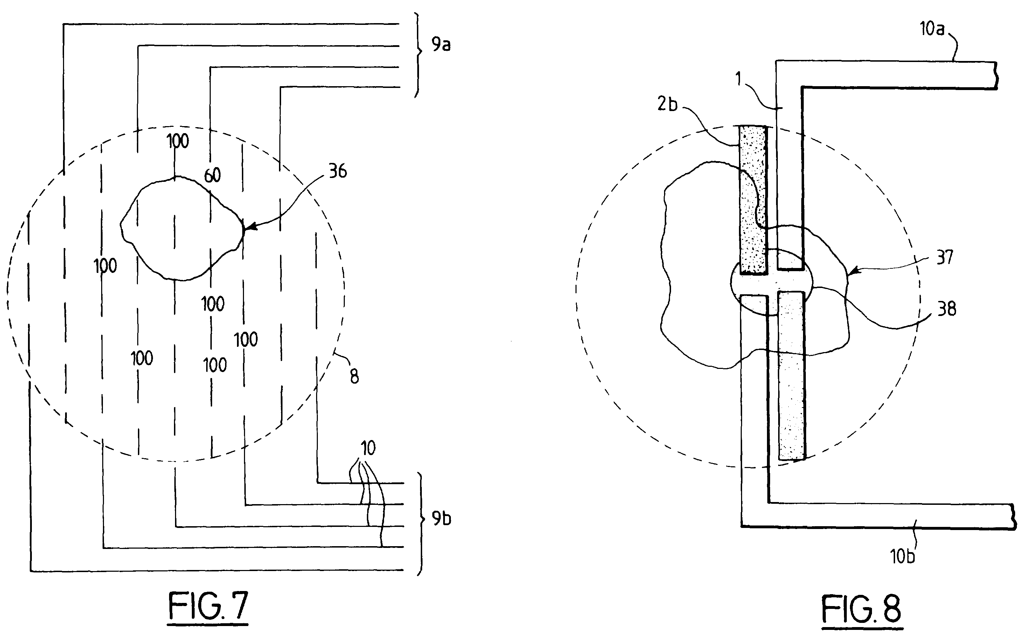

Sur la figure 7, on a représenté un exemple de la cartographie thermique du fond de puits de cuve, dans le cas d'un début de percement du fond de la cuve du réacteur avec écoulement du corium qui vient en contact avec une zone du fond de puits de cuve. On a également représenté les deux ensembles de fibres optiques 9a et 9b qui sont placés en sens inverse dans une disposition en peigne, comme décrit précédemment.

Les valeurs numériques indiquées en chacun des points de mesure correspondent aux températures mesurées par les réseaux de Bragg gravés sur les fibres optiques 10. Ces valeurs sont indiquées en degré Celsius. Ces valeurs permettent de tracer l'enveloppe d'une zone 36 du fond de puits de cuve qui correspond à une zone d'étalement du corium s'écoulant par une ouverture locale du fond de cuve. Cette ouverture peut correspondre par exemple à une manchette de traversée du fond de cuve qui a été désoudée et arrachée.

En fonction de la vitesse d'écoulement du corium, la valeur de la température sur le fond du puits de cuve augmente en tout point où le corium vient en contact avec le fond du puits de cuve.

La figure 8 représente une partie du fond de puits de cuve sur laquelle du corium fondu s'est déversé et s'est étalé suivant une zone 37 ayant un contour irrégulier et recouvrant une partie de la longueur d'une première fibre optique 10a du premier ensemble 9a de fibres optiques de mesure et une partie d'une seconde fibre optique 10b du second ensemble de fibres optiques de mesure 9b. Dans la partie centrale 38 de la zone 37 d'étalement du corium qui correspond à la zone de chute du corium sur le fond de puits de cuve, la température du fond de puits de cuve sur lequel ou à l'intérieur duquel sont placées les fibres optiques a tendance à augmenter fortement pour dépasser par exemple une température de 1000°C. Cette température est telle que le fond du puits de cuve en béton est susceptible de se dégrader, de sorte que les fibres viennent en contact directe avec le corium. Les fibres optiques sont détruites et sectionnées dans la zone 38 de chute du corium.

Le corium qui s'étale depuis la partie centrale 38, à l'intérieur de la zone 37 se refroidit et la destruction des fibres est limitée aux deux fibres traversant la zone centrale 38.

Bien que les fibres optiques 10a et 10b soient sectionnées au niveau de la zone 38, ces fibres conservent une partie active en amont de la zone centrale 38 dans laquelle elles sont sectionnées.

Sur la figure 8, on a ombré les parties des fibres 10a et 10b qui deviennent inutilisables et laissé en blanc la partie des fibres 10a et 10b qui est encore utilisable pour les mesures. La disposition inversée des fibres 10a et 10b des ensembles de fibres 9a et 9b permet de continuer à effectuer des mesures de température suivant toute la zone d'étalement du corium, du fait de la disposition adjacente des parties de mesure des fibres 10a et 10b.

Il est donc possible de suivre dans tous les cas l'évolution de la propagation du corium fondu sur le fond du puits de cuve. L'enregistrement des valeurs des températures mesurées permet de reconstituer l'évolution du phénomène et d'analyser ses conséquences.

Le procédé et le dispositif suivant l'invention permettent donc de réaliser dans tous les cas une détection et une surveillance efficace du percement de la cuve d'un réacteur nucléaire par du corium fondu. Il est possible en particulier de suivre l'évolution de la dégradation du fond de la cuve du réacteur nucléaire se traduisant par un ou plusieurs écoulements de corium sur le fond du puits de cuve.

L'invention ne se limite pas au mode de réalisation qui a été décrit.

C'est ainsi qu'on peut imaginer d'autres dispositions de fibres optiques pour réaliser une mesure de température en une pluralité de points sur le fond de la cuve d'un réacteur nucléaire.

Il est également possible d'utiliser des méthodes de mesure à partir de fibres optiques différentes de méthodes de mesure faisant intervenir des réseaux de Bragg gravés sur les fibres. De manière plus générale, il est possible également de réaliser des mesures de température en une pluralité de points du fond de puits de cuve pour déterminer une cartographie thermique du fond de puits de cuve, en utilisant des moyens de mesure différents de moyens optiques. On peut réaliser ces mesures en utilisant des capteurs isolés répartis sur le fond de la cuve du réacteur tels que des thermocouples, bien que l'utilisation de tels capteurs isolés ne présentent pas les mêmes avantages que l'utilisation d'un réseau de fibres optiques.

L'invention s'applique non seulement à la détection et à la surveillance du percement de la cuve d'un réacteur nucléaire à eau sous pression mais également à la détection et à la surveillance du percement d'une cuve d'un réacteur nucléaire d'un type différent, par exemple au percement de la cuve d'un réacteur nucléaire à eau bouillante, ou à eau lourde, à la suite d'une fusion accidentelle du coeur.

## Revendications

1. Procédé de détection et de surveillance du percement du fond (2a) de la cuve (2) d'un réacteur nucléaire, dans le cas d'une fusion du coeur du réacteur et d'équipements internes disposés à l'intérieur de la cuve (2) due à un fonctionnement accidentel du réacteur nucléaire, la cuve (2) étant placée à l'intérieur d'un puits de cuve (3) ayant un axe vertical ménagé dans une structure en béton d'un bâtiment réacteur (1) et comportant un fond de puits (5) disposé en-dessous et à l'aplomb du fond de la cuve (2), caractérisé par le fait qu'on mesure de manière continue, la température en une pluralité de points répartis sur la surface du fond de puits de cuve (5).

2. Procédé suivant la revendication 1, caractérisé par le fait qu'on envoie un signal lumineux à large spectre de fréquence dans une pluralité de fibres optiques (10) disposées sur le fond du puits de cuve (5), réparties suivant toute la section transversale du fond de puits de cuve (5) et comportant chacune une pluralité de réseaux de Bragg (14) répartis suivant leur longueur, chaque réseau de Bragg (14) étant prévu pour assurer la rétrodiffusion d'un signal de longueur d'onde particulière, qu'on récupère les signaux rétrodiffusés par les réseaux de Bragg (14) et qu'on détermine à partir des longueurs d'onde des signaux rétrodiffusés, la répartition de la température dans le fond du puits de cuve (5).

3. Procédé suivant la revendication 2, caractérisé par le fait qu'on envoie le signal lumineux à large spectre successivement dans chacune (10) des fibres (10a, 10b, ..., 10n) de la pluralité de fibres disposées sur le fond de puits de cuve (5), qu'on récupère chacun des signaux réfléchis par chacun des réseaux de Bragg (14) répartis suivant la longueur de la fibre optique (10), qu'on transforme les signaux optiques réfléchis en signaux électriques et qu'on traite les signaux électriques, de manière à déterminer les températures au niveau de chacun des réseaux de Bragg (14) répartis suivant la longueur de la fibre optique (10).

4. Procédé suivant la revendication 3, caractérisé par le fait qu'on définit par un repère chacune des fibres successives dans lesquelles on envoie un signal à large spectre et à partir desquelles on récupère un signal réfléchi, de manière à repérer chacun des points du fond du puits de cuve (5) sur lequel on effectue une mesure de température, par le repère d'une fibre optique (10) et par une fréquence correspondant à une fréquence de réflexion d'un réseau (14) de la fibre (10).

5. Procédé suivant l'une quelconque des revendications 2 à 4, caractérisé par le fait qu'on envoie dans les fibres optiques (10a, 10b, ..., 10n), un signal lumineux ayant une fréquence en dehors du spectre de fréquence du signal lumineux à large spectre et qu'on récupère un signal réfléchi, de manière à contrôler l'état des fibres optiques (10a, 10b, ..., 10n) et de l'ensemble du circuit de mesure optique.

6. Dispositif de détection et de surveillance du percement du fond de la cuve (2) d'un réacteur nucléaire, dans le cas d'une fusion du coeur du réacteur et d'équipements internes disposés à l'intérieur de la cuve (2) due à un fonctionnement accidentel du réacteur nucléaire, la cuve (2) étant placée à l'intérieur d'un puits de cuve (3) ayant un axe vertical ménagé dans une structure en béton d'un bâtiment (1) du réacteur et comportant un fond de puits (5) disposé en-dessous et à l'aplomb du fond (2a) de la cuve (2), caractérisé par le fait qu'il comporte une pluralité de fibres optiques (10) disposées sur le fond de puits de cuve (5), réparties suivant l'ensemble d'une zone (8) située à l'aplomb du fond (2a) de la cuve (2) du réacteur nucléaire, comportant chacune, dans une partie située dans la zone (8) à l'aplomb du fond (2a) de la cuve (2) des réseaux de Bragg répartis suivant leur longueur et susceptibles d'assurer chacun la réflexion d'un signal de longueur d'onde déterminée et différente des longueurs d'ondes des autres réseaux de Bragg (14) disposés sur la même fibre optique (10).

7. Dispositif suivant la revendication 6, caractérisé par le fait qu'il comporte de plus un commutateur optique (16) comportant une voie d'entrée à laquelle est reliée une fibre optique (18) d'alimentation en un signal lumineux à large bande de fréquence et une pluralité de voies de sorties à chacune desquelles est reliée, par l'une de ses extrémités, une fibre optique de mesure (10a, 10b, ..., 10n).

8. Dispositif suivant l'une quelconque des revendications 6 et 7, caractérisé par le fait que les fibres optiques de mesure (10a, 10b, ..., 10n) constituent deux ensembles (9a, 9b) de fibres optiques ayant une partie rectiligne disposée sur le fond de puits de cuve (5) à l'aplomb du fond de cuve (2a), dans des dispositions toutes parallèles entre elles et dirigées dans des sens opposés, les parties rectilignes des fibres optiques d'un premier ensemble (9a) étant intercalées entre les parties rectilignes des fibres optiques du second ensemble (9b).

9. Dispositif suivant l'une quelconque des revendications 7 et 8, caractérisé par le fait qu'il comporte de plus un module d'émission (22) d'un signal lumineux à large spectre relié par l'intermédiaire d'une fibre optique d'alimentation (18) et du commutateur optique (16) aux fibres optiques de mesure (10), un module de réception (26) relié à la fibre d'alimentation (18) par l'intermédiaire d'un coupleur (24) et une unité de commande et de traitement (27) reliée électriquement au module d'émission (22) et au module de réception (26).

10. Dispositif suivant la revendication 9, caractérisé par le fait que l'unité de traitement et de commande (21) est reliée à un poste de commande et de visualisation (20) permettant de visualiser la répartition des températures sur le fond de puits de cuve (5).

11. Dipositif suivant l'une quelconque des revendications 9 et 10, caractérisé par le fait que le module d'émission (22), le module de réception (26) et l'unité de traitement et de commande (27) sont disposés à l'extérieur du bâtiment du réacteur (15) et que le commutateur optique (16) est disposé à l'intérieur du bâtiment réacteur (15).

12. Dispositif suivant l'une quelconque des revendications 9 et 10, caractérisé par le fait que le module d'émission (22), le module de réception (26), l'unité de traitement et de commande (27) et le commutateur optique (16) sont disposés à l'extérieur du bâtiment réacteur (15).
